# EUROPEAN PATENT SPECIFICATION

(11) **EP 1 941 621 B1**
(45) Date of publication and mention of the grant of the patent: **26.12.2012**
(21) Application number: 06827907.4
(22) Date of filing: 27.10.2006
(51) Int. Cl.: H04J 13/00, H04J 11/00, H04B 1/7097, H04B 1/69

(54) **VARYING SCRAMBLING/OVSF CODES WITHIN A TD-CDMA SLOT TO OVERCOME JAMMING EFFECT BY A DOMINANT INTERFERER**
VARIIEREN VON VERWÜRFELUNGS-/OVSF-CODES IN EINEM TD-CDMA-SCHLITZ ZUR ÜBERWINDUNG EINES STÖREFFEKTS DURCH EINEN DOMINANTEN STÖRER
METHODES FAISANT VARIER DES CODES DE BROUILLAGE /OVSF DANS UNE FENTE AMRC/AMRT, A L'AIDE D'UN SYSTEME D'INTERFERENCES DOMINANT, POUR SUPPRIMER UN EFFET D'ENGORGEMENT,

(30) Priority: 27.10.2005 US 731025 P
(43) Date of publication of application: 09.07.2008
(73) Proprietor: QUALCOMM Incorporated, San Diego, CA 92121 (US)
(72) Inventor: SAMBHWANI, Sharad, Deepak, San Diego, California 92121-1714 (US)
(74) Representative: Catesby, Olivia Joanne
(86) International application number: PCT/US2006/060335
(87) International publication number: WO 2007/051189

(56) References cited:
- WO-A-00/74255
- WO-A-02/056517

## Description

### BACKGROUND

### I. Field

The following description relates generally to wireless communications, and more particularly to increasing interference variation to reduce a jamming effect caused by a dominant interferer in a TD-CDMA wireless communication environment.

### II. Background

Wireless communication systems have become a prevalent means by which a majority of people worldwide has come to communicate. Wireless communication devices have become smaller and more powerful in order to meet consumer needs and to improve portability and convenience. The increase in processing power in mobile devices such as cellular telephones has lead to an increase in demands on wireless network transmission systems. Such systems typically are not as easily updated as the cellular devices that communicate there over. As mobile device capabilities expand, it can be difficult to maintain an older wireless network system in a manner that facilitates fully exploiting new and improved wireless device capabilities.

More particularly, frequency division based techniques typically separate the spectrum into distinct channels by splitting it into uniform chunks of bandwidth, for example, division of the frequency band allocated for wireless communication can be split into 30 channels, each of which can carry a voice conversation or, with digital service, carry digital data. Each channel can be assigned to only one user at a time. One known variant is an orthogonal frequency division technique that effectively partitions the overall system bandwidth into multiple orthogonal subbands. These subbands are also referred to as tones, carriers, subcarriers, bins, and/or frequency channels. Each subband is associated with a subcarrier that can be modulated with data. With time division based techniques, a band is split time-wise into sequential time slices or time slots. Each user of a channel is provided with a time slice for transmitting and receiving information in a round-robin manner. For example, at any given time t, a user is provided access to the channel for a short burst. Then, access switches to another user who is provided with a short burst of time for transmitting and receiving information. The cycle of "taking turns" continues, and eventually each user is provided with multiple transmission and reception bursts.

Code division based techniques typically transmit data over a number of frequencies available at any time in a range. In general, data is digitized and spread over available bandwidth, wherein multiple users can be overlaid on the channel and respective users can be assigned a unique sequence code. Users can transmit in the same wide-band chunk of spectrum, wherein each user's signal is spread over the entire bandwidth by its respective unique spreading code. This technique can provide for sharing, wherein one or more users can concurrently transmit and receive. Such sharing can be achieved through spread spectrum digital modulation, wherein a user's stream of bits is encoded and spread across a very wide channel in a pseudo-random fashion. The receiver is designed to recognize the associated unique sequence code and undo the randomization in order to collect the bits for a particular user in a coherent manner.

A typical wireless communication network (*e.g*., employing frequency, time, and code division techniques) includes one or more base stations that provide a coverage area and one or more mobile (*e.g*., wireless) terminals that can transmit and receive data within the coverage area. A typical base station can simultaneously transmit multiple data streams for broadcast, multicast, and/or unicast services, wherein a data stream is a stream of data that can be of independent reception interest to a mobile terminal. A mobile terminal within the coverage area of that base station can be interested in receiving one, more than one or all the data streams carried by the composite stream. Likewise, a mobile terminal can transmit data to the base station or another mobile terminal. Such communication between base station and mobile terminal or between mobile terminals can be degraded due to channel variations and/or interference power variations. For example, the aforementioned variations can affect base station scheduling, power control and/or rate prediction for one or more mobile terminals.

Conventional TDD-CDMA systems employ a static scrambling code sequence throughout one or more radio frames, which can result in increased interference between users with similar code assignments in different sectors. Thus, there is an unmet need in the art for a system and/or methodology of improving throughput in such wireless communication systems.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with performing effective code hoping on a symbol-to-symbol basis in a wireless communication environment. According to one aspect, effective codes (*e.g*., Walsh code-scrambling code combinations) can be varied and/or recycled within a time slot of a transmission frame to increase interference diversity and reduce a jamming effect caused by a dominant interferer in a sector near an interfered user's sector.

According to one or more embodiments, a method of varying scrambling codes within a radio frame time slot for a user device in a wireless communication environment can comprise detecting interference of the user device and varying a scrambling code sequence employed to multiply a Walsh code assigned to the user device at least once within a transmission time slot in response to the detected interference. The method can further comprise employing at least two different scrambling code sequence sets within the time slot, which can be 2560 chips in length and can be divided into 160 16-chip segments. Thus, according to the method, anywhere from 2 to 160 different scrambling code sequence sets can be employed to scramble the 160 16-chip segments in a given time slot. Moreover, feedback can be employed to continuously evaluate interference levels and to adjust a frequency of scrambling code variation within a time slot until interference is controlled (*e.g*., reduced to a level at or below a predetermined threshold level, ...).

According to another aspect, an apparatus that facilitates effective code hopping in a wireless communication environment can comprise a memory that stores information comprising scrambling code variation patterns, and a processor, coupled to the memory, that varies scrambling code assignments to a user device at least once per time slot during a transmission frame. The apparatus can further comprise an interference monitoring component that assesses when an interference level is above a predetermined threshold level, and a recycling pattern generator that generates scrambling code sequence variation patterns for allocation to segments within the time slot during a transmission event. The processor can determine an appropriate scrambling code recycling pattern to apply to a time slot for the user device based at least in part on information received from the interference monitoring component. Additionally, the memory can store one or more lookup tables comprising information related to user device identity, Walsh code assignments, scrambling code allocations, detected interference events, scrambling code recycling patterns, and the like.

According to yet another aspect an apparatus that facilitates scrambling code variation within a time slot in a wireless communication environment can comprise means for detecting interference at the user device caused by a dominant user device with a similar code assignment in another sector, and means for varying scrambling code sequences used to multiply Walsh codes assigned to the user device during a communication time slot. The means for varying scrambling code sequences can employ at least two different scrambling code sequences to vary the scrambling code sequences allocated to the user device at least once per time slot. The apparatus can further comprise means for determining whether scrambling code sequence variation has reduced interference below a predetermined threshold level, and means for increasing scrambling code sequence variation in the same or a subsequent time slot if interference has not been reduce to a level below the predetermined threshold level.

According to yet another aspect, a computer-readable medium having stored thereon computer-executable instructions for detecting interference at a user device and for varying a scrambling code sequence, employed to multiply a Walsh code assigned to the user device, at least once within a transmission time slot. The computer-readable can further comprise instructions for employing at least two different scrambling code sequence sets within the time slot, and instructions for determining whether detected interference has been reduced to a level below a predetermined threshold level after scrambling code variation. The computer-readable medium can still further comprise instructions for increasing a frequency of scrambling code variation within the time slot upon a determination that interference has not been reduced to a level below the predetermined threshold level.

According to another aspect, processor is described that executes instructions for performing effective code hopping within a time slot of a radio frame in a communication environment, the instructions comprising detecting interference at a user device, and varying a scrambling code sequence, employed to multiply a Walsh code assigned to the user device, at least once within a transmission time slot. The processor can further comprise instructions for employing at least two different scrambling code sequence sets within the time slot, for determining whether detected interference has been reduced to a level below a predetermined threshold level after scrambling code variation, and for increasing a frequency of scrambling code variation within the time slot upon a determination that interference is not reduced to a level below the predetermined threshold level.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 illustrates a wireless network communication system in accordance with various embodiments presented herein.

FIG. 2 is an illustration of a multiple access wireless communication system that can be employed to transmit effective codes according to an intraframe recycling protocol according to one or more embodiments is illustrated.

FIG. 3 illustrates a radio frame comprising a static scrambling code recycling scheme, in accordance with various aspects.

FIG. 4 is an illustration of a radio frame wherein effective codes are hopped and/or varied from symbol to symbol in a TDD-CDMA wireless communication environment, in accordance with various aspects described herein.

FIG. 5 is an illustration of a methodology for mitigating jamming due to a cross-correlation of effective codes assigned to users in different sectors, in accordance with one or more aspects.

FIG. 6 illustrates a methodology for dynamically evaluating interference and applying an appropriate interframe scrambling code recycling pattern to mitigate the interference, in accordance with various aspects.

FIG. 7 illustrates a methodology for employing a interference level feedback information to facilitate dynamically increasing interference diversity and varying effective codes within a time slot of a radio frame, in accordance with one or more aspects.

FIG. 8 is an illustration of a user device that facilitates hopping effective codes within a time slot in a TDD-CDMA wireless communication environment, in accordance with one or more embodiments described herein.

FIG. 9 is an illustration of a system that facilitates performing varying effective codes within a time slot to mitigate jamming by a dominant interferer in a TDD-CDMA wireless communication environment in accordance with one or more aspects set forth herein.

FIG. 10 is an illustration of a wireless network environment that can be employed in conjunction with the various systems and methods described herein.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

As used in this application, the terms "component," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. One or more components may reside within a process and/or thread of execution and a component may be localized on one computer and/or distributed between two or more computers. Also, these components can execute from various computer readable media having various data structures stored thereon. The components may communicate by way of local and/or remote processes such as in accordance with a signal having one or more data packets (*e.g*., data from one component interacting with another component in a local system, distributed system, and/or across a network such as the Internet with other systems by way of the signal).

Furthermore, various embodiments are described herein in connection with a subscriber station. A subscriber station can also be called a system, a subscriber unit, mobile station, mobile, remote station, access point, remote terminal, access terminal, user terminal, user agent, user device, mobile device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks (*e.g.*, compact disk (CD), digital versatile disk (DVD)...), smart cards, and flash memory devices (*e.g*., card, stick, key drive...).

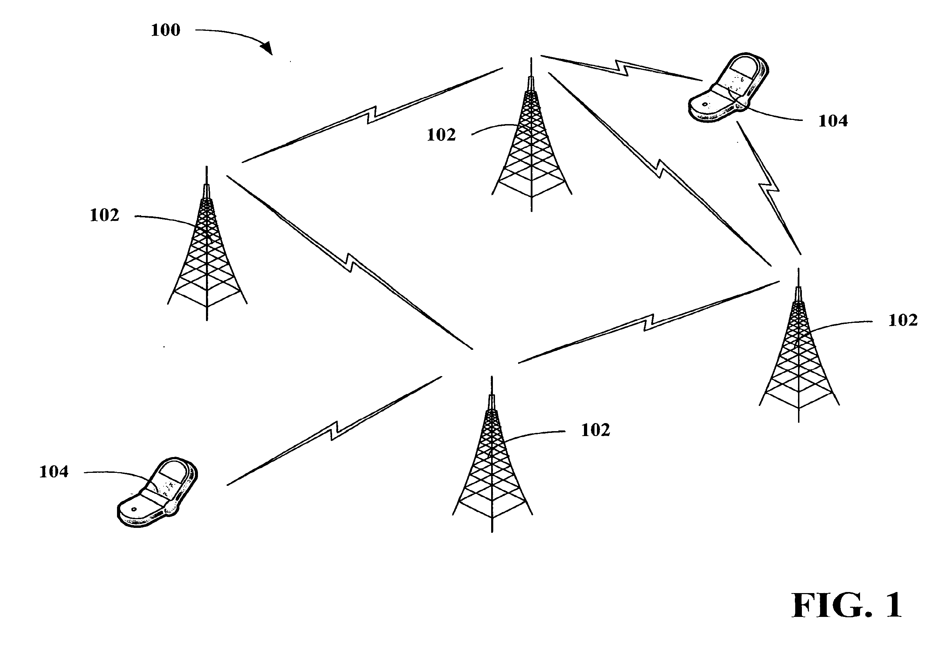

Referring now to **Fig.1**, a wireless network communication system 100 in accordance with various embodiments presented herein is illustrated. Network 100 can comprise one or more base stations 102 in one or more sectors that receive, transmit, repeat, *etc*., wireless communication signals to each other and/or to one or more mobile devices 104. Each base station 102 can comprise a transmitter chain and a receiver chain, each of which can in turn comprise a plurality of components associated with signal transmission and reception (*e.g*., processors, modulators, multiplexers, demodulators, demultiplexers, antennas, *etc*.), as will be appreciated by one skilled in the art. Mobile devices 104 can be, for example, cellular phones, smart phones, laptops, handheld communication devices, handheld computing devices, satellite radios, global positioning systems, PDAs, and/or any other suitable device for communicating over wireless network 100.

TD-CDMA employs Walsh codes, also called orthogonal variable spreading factor (OVSF) codes, to encode a communication channel in both the forward link (FL) and the reverse link (RL). A Walsh code is an orthogonal code that facilitates uniquely identifying individual communication channels, as will be appreciated by one skilled in the art. A signal encoded using a Walsh code is typically interpreted as noise by a receiver that does not employ the same Walsh code to decode the signal. In traditional 3GPP TDD-CDMA systems (*e.g*., employing a high chip-rate of 3.84 Mcps), a cell-specific scrambling code is varied once per radio frame (*e.g*., every 10 ms). When a dominant interferer, such as a user device in another sector, is introduced, a jamming effect can occur due to a lack of interference variation over a radio frame. Additionally, the scrambling code is fixed for an entire period of allocation when employing such conventional interframe code variation schemes. In order to facilitate providing greater interference variation, systems and methods described herein can facilitate varying a short scrambling code-OVSF code combination (*e.g*., an "effective code") within a frame and/or within a time slot, such that the effective code can be recycled every *N* symbols per slot, where *N* is an integer, according to an intraframe recycling scheme. In this manner, various aspects set forth herein can mitigate the jamming effects associated with conventional systems that employ an inter frame variation scheme recycle a scrambling code every two radio frames and the slow averaging effect associated therewith when a dominant interferer is present.

In accordance with one or more aspects, a short scrambling code-OVSF code combination can be hopped from symbol to symbol in a TD-CDMA communication system. Such symbols can have, for instance, a 16-chip duration, and the code combination can repeat itself every *N* symbols, where *N* is an integer. Thus, interference can be varied from symbol to symbol to ensure sufficient interference variation, and thus an adequate averaging effect, in the presence of a dominant interferer in order to surmount the jamming effect that can occur in conventional systems.

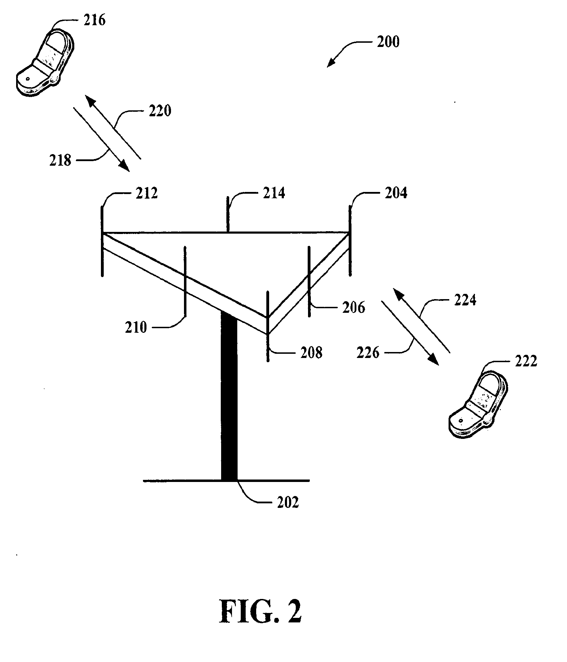

Referring now to **Fig. 2**, a multiple access wireless communication system 200 that can be employed to transmit effective codes according to an intraframe recycling protocol according to one or more embodiments is illustrated. A 3-sector base station 202 includes multiple antenna groups, one including antennas 204 and 206, another including antennas 208 and 210, and a third including antennas 212 and 214. According to the figure, only two antennas are shown for each antenna group, however, more or fewer antennas may be utilized for each antenna group. Mobile device 216 is in communication with antennas 212 and 214, where antennas 212 and 214 transmit information to mobile device 216 over forward link 220 and receive information from mobile device 216 over reverse link 218. Mobile device 222 is in communication with antennas 204 and 206, where antennas 204 and 206 transmit information to mobile device 222 over forward link 226 and receive information from mobile device 222 over reverse link 224.

Each group of antennas and/or the area in which they are designated to communicate is often referred to as a sector of base station 202. In an embodiment, antenna groups each are designed to communicate to mobile devices in a sector of the areas covered by base station 202. In communication over forward links 220 and 226, the transmitting antennas of base station 202 can utilize beam-forming techniques in order to improve the signal-to-noise ratio of forward links for the different mobile devices 216 and 222. Additionally, a base station using beam-forming to transmit to mobile devices scattered randomly through its coverage area causes less interference to mobile devices in neighboring cells/sectors than a base station transmitting through a single antenna to all mobile devices in its coverage area. A base station may be a fixed station used for communicating with the terminals and may also be referred to as an access point, a Node B, or some other terminology. A mobile device may also be called a mobile station, user equipment (UE), a wireless communication device, terminal, access terminal, user device, or some other terminology.

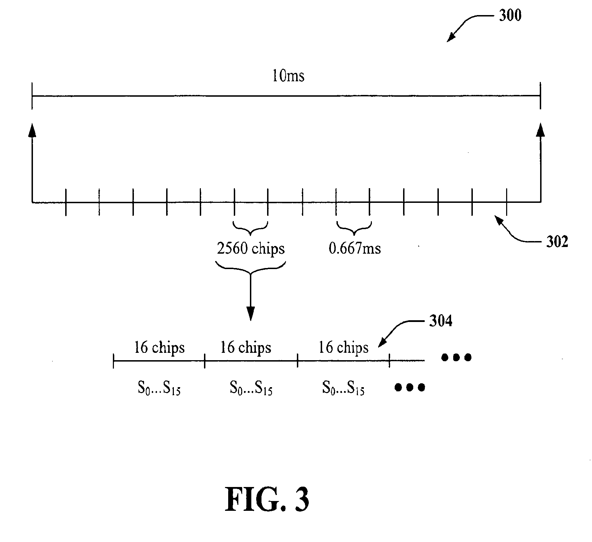

**Fig. 3** illustrates a radio frame 300 comprising a static scrambling code recycling scheme, in accordance with various aspects. Radio frame 300 is approximately 10 ms in duration and comprises 15 time slots 302, each of which in turn is approximately 667 microseconds in duration. Each time slot 302 comprises 2560 chips, which can be subdivided into 16-chip segments 304, for a total of 160 segments per time slot. A series of scrambling codes So through S₁₅ are illustrated below each segment 304. As is standard with conventional systems, the same set of scrambling codes S₀-S₁₅ are employed for all segments 304 in a time slot 302, and/or for all time slots in radio frame 300. That is, scrambling code sequence variation typically occurs only once per radio frame in conventional 3GPP TDD-CDMA systems. This can result in a jamming effect when a dominant interferer in another sector is present, due to a lack of interference variation by the interferer over a radio frame. Additionally, the Walsh code assigned to a user device and the dominant interferer remains assigned thereto for the entire period of allocation, such that the jamming effect is carried through. Thus, significant jamming can occur due to cross-correlation between effective spreading codes (*e.g.*, Walsh code x short scrambling code) of two users in different cells or sectors on the same uplink or downlink time slot. Variation of scrambling code-Walsh code combinations has heretofore been implemented only once every radio frame or every two radio frames due to processing constraints and high overhead costs.

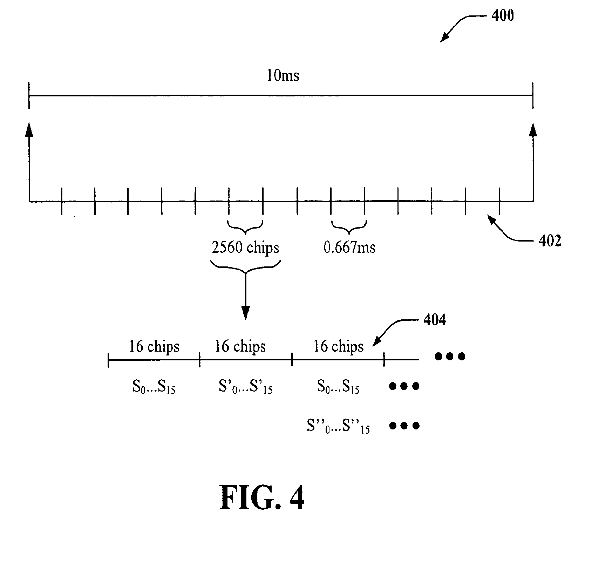

**Fig. 4** is an illustration of a radio frame 400 wherein effective codes are hopped and/or varied from symbol to symbol in a TDD-CDMA wireless communication environment, in accordance with various aspects described herein. In order to mitigate jamming effects caused by cross-correlation of effective codes by a dominant interferer as set forth above, scrambling codes can be varied within a time slot in order to provide intraframe scrambling code hopping to reduce cross-correlation. For instance, radio frame 400 can comprise 15 time slots 402, which in turn can respectively comprise 160 16-chip segments 404. Scrambling codes can be assigned and varied within a time slot. For example, a first set of scrambling codes S₀-S₁₅ can be allocated to a first segment, and upon transmission of a second segment, a new set of scrambling codes S'₀-S'₁₅ can be allocated. The initial set of scrambling codes S₀-S₁₅ can be re-allocated in a subsequent code segment and so on, in order to facilitate varying effective codes within the time slot to mitigate jamming at a base station receiver.

According to a related example, scrambling codes can be varied such that a first set of scrambling codes S₀-S₁₅ can be applied to a first segment, a second set of scrambling codes S'₀-S'₁₅ can be applied to a second segment, a third set of scrambling codes S"₀-S"₁₅ can be allocated to a third segment, and so on. Indeed, any permutation of scrambling codes can be employed to vary effective codes within a time slot, such that scrambling codes can be hopped anywhere from 1 to 160 times within a time slot 402. The ability to achieve such variation can be partly accredited to recent advances in processing speed, memory capacity, and the like. Moreover, recycling patterns can be any desired pattern such that scrambling code sequences can be reused within a time slot.

According to other examples, a scrambling code sets can be varied between 4 and 16 times within a single time slot 402, and such variations can be equally spaced across the time slot or can be randomly or pseudo-randomly allocated. For instance, a scrambling code sequence can be allocated at segment 0, and variation thereof can occur at segment 39, at segment 79, at segment 119, and again at segment 159, if desired. Alternatively, scrambling code sequence variations can occur at segments 21, 98, 131, or any other suitable or desired point in time slot 402. Furthermore, scrambling code variations need not be performed according to a fixed schedule across time slots within a radio frame or frames, but rather a pseudo-random hopping schedule can be employed to mitigate cross-correlation between users assigned to the same Walsh code sets in different sectors.

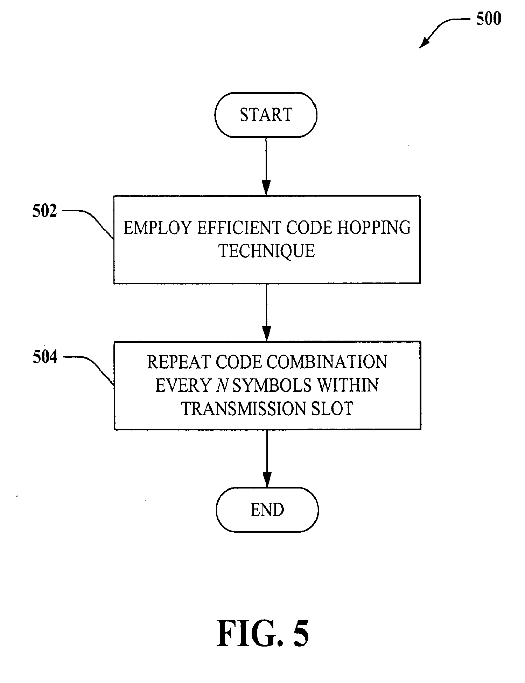

Referring to **Figs. 5-7**, methodologies relating to varying scrambling codes within a time slot in a UMTS TDD wireless environment, an OFDM environment, an OFDMA environment, a CDMA environment, a TDMA environment, a TDD environment, an SDMA environment, or any other suitable wireless environment. While, for purposes of simplicity of explanation, the methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more embodiments.

**Fig. 5** is an illustration of a methodology 500 for mitigating jamming due to a cross-correlation of effective codes assigned to users in different sectors, in accordance with one or more aspects. At 502, a hopping technique for varying effective codes (*e.g*., Walsh code x scrambling code product) can be employed. Such technique can be, for instance, varying a set of scrambling codes periodically throughout a time frame to mitigate cross-correlation between codes assigned to user devices in different sectors wherein one user device is a dominant interferer. At 504, such scrambling codes can be varied every *N* symbols, or 16-chip segments, within a time frame, where N is an integer. For example, a first set of scrambling codes can be employed for a fist segment, an a second set of scrambling codes can be substituted for the first set of scrambling codes at some subsequent segment within a time slot.

To further this example, a typical radio frame comprises 15 time slots, each of which further comprises 160 16-chip long segments. Thus, anywhere from 2 to 160 different scrambling code sequences can be employed within a time slot to vary effective code combinations (*e.g*., Walsh code multiplied by scrambling code) to increase interference diversity. According to an aspect, two sets of scrambling codes can be employed per time slot and can be alternated every one or more segments to mitigate jamming at a base station receiver. According to another aspect, 16 scrambling code sets can be employed within a time frame to vary effective codes therein every tenth segment, *etc*. Thus, it will be understood that any permutation of different and/or recycled scrambling code sets can be utilized to improve interference diversity and to mitigate jamming caused by a dominant interferer in a first sector who is assigned the same effective code as a user in another sector.

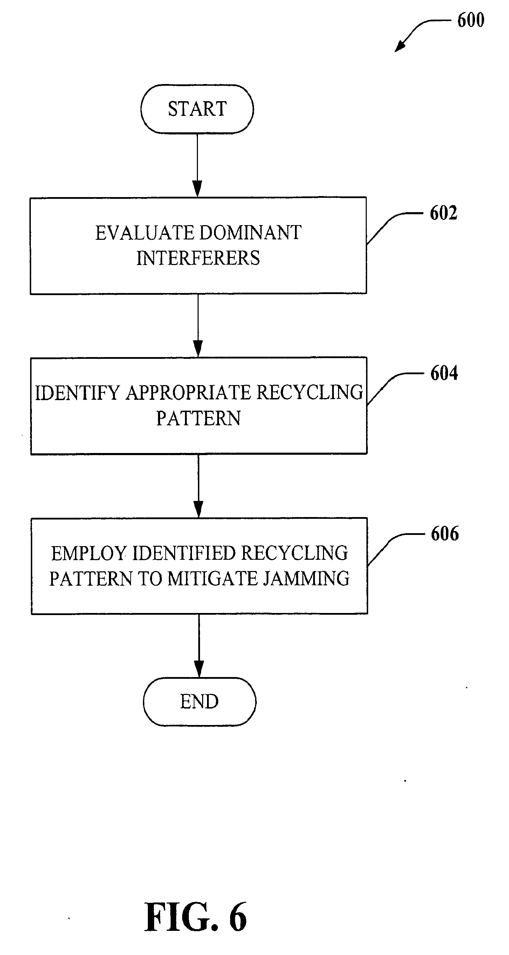

**Fig. 6** illustrates a methodology 600 for dynamically evaluating interference and applying an appropriate interframe scrambling code recycling pattern to mitigate the interference, in accordance with various aspects. At 602, the presence and/or magnitude of dominant interferers can be evaluated. For instance, such evaluation can relate to a number of devices assigned the same effective codes, or assigned the same Walsh codes, to determine actual and/or potential interference levels. At 604, an appropriate scrambling code variation pattern can be identified to mitigate cross-correlation of effective codes between user devices assigned duplicate effective codes in different sectors. The identified scrambling code variation pattern can be employed at 606 to mitigate jamming due to cross-correlation of codes between duplicately assigned users in different sectors.

For example, in a case where M interferers (*e.g*., duplicately assigned users in various sectors) are identified at 602, then N scrambling code sets can be employed to increase a frequency with which scrambling codes, and thus effective codes, are varied within a time frame. In this manner, anywhere from 2 to 160 segments within a time slot of a radio frame can be differently encoded without requiring reallocation of Walsh codes. Additionally, user devices and/or base stations can comprise data stores that store information related to scrambling code sequence sets, lookup tables related thereto, user device identity, Walsh code assignments, *etc*., in order to facilitate performing effective code variation in accordance with the various methodologies set forth herein.

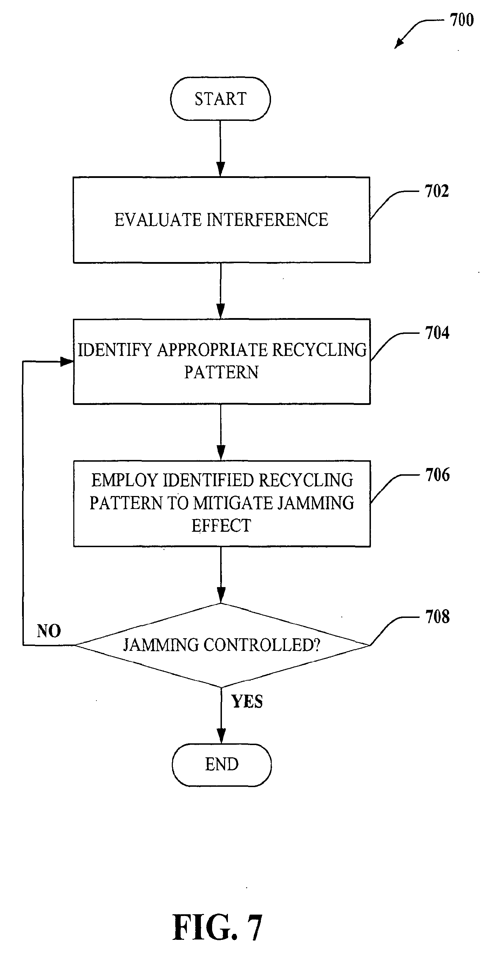

**Fig. 7** illustrates a methodology 700 for employing a interference level feedback information to facilitate dynamically increasing interference diversity and varying effective codes within a time slot of a radio frame, in accordance with one or more aspects. At 702, interference levels can be evaluated to detect one or more dominant interferers that have similar effective code allocations to a user device such that a high cross-correlation exists between effective codes, which can cause a jamming effect at a receiver to which to which the user device and the interfering device are transmitting. In order to combat the jamming effect, at 704, a scrambling code sequence recycling pattern can be identified. At 706, the recycling pattern can be implemented in an interfered user device to vary scrambling code sets within the transmission time slot to ensure that the interference is not carried through an entire radio frame. For instance, the recycling pattern can comprise 8 scrambling code sets, which can be cycled through within a single 160-segment time slot or across several time frames within a radio frame to reduce cross-correlation between effective codes assigned to the interfered device and an interfering device. Indeed, any number of segments between 2 and 160 can be allocated different scrambling code sequences, and any permutation of new and recycled scrambling code sets can be utilized to vary effective codes within the time slot.

At 708, a determination can be made regarding whether the jamming effect has been sufficiently reduced. Such determination can be made in conjunction with, for example, a predetermined acceptable threshold level of interference, above which interference is deemed unacceptable. If jamming has not been controlled (*e.g*., the interference level is still above the acceptable threshold level), then the method can revert to 704 for identification of a more aggressive scrambling code hopping pattern (*e.g*., 16 code variations per time slot, 24 variations per time slot, or any other suitable recycling pattern) to further reduce cross-correlation of coded signals between the interfered and interfering devices. If interference has been successfully reduced, then the method 700 can terminate and/or continuously be reiterated to facilitate continuous monitoring of interference and mitigation thereof when necessary.

It will be appreciated that, in accordance with one or more embodiments and/or methods described herein, inferences can be made regarding appropriate scrambling code recycling schemes, frequency of code variation within a time frame, *etc.* As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

According to an example, one or methods presented above can include making inferences regarding a number of scrambling code set variations to perform in a tie slot to increase interference diversity for an interfered user device and mitigate interference from a similarly assigned interfering device in another sector. Such inferences can be based at least in part, for example, a magnitude of interference caused by the dominant interferer, and number of interfering devices in nearby sectors, and the like. For instance, in a three-sector service area served by a single base station, there can be three user devices allocated the same Walsh code sequences and having similar or identical scrambling codes multiplied thereby such that all three devices have similar or identical effective codes. If two of the user devices interfere with the third, then a more aggressive scrambling code variation pattern (*e.g*., frequency of variation) can be inferred to be sufficient as compared to a scrambling code recycling pattern that might be applied in a scenario where only one dominant interferer is present. Such inferences can facilitate minimizing a time period for reaction to a detected dominant interferer, which in turn can facilitate providing a more robust user experience when communicating over a TD-CDMA wireless network.

According to another example, inferences can be made regarding whether or not to recycle a scrambling code sequence in a transmission time slot. For instance, in some cases a first scrambling code sequence set can be allocated to a first plurality of time slot segments, and can be substituted by a second scrambling code sequence set at some subsequent segment. The first set can then be substituted back into the variation rotation to replace the second set at some further subsequent segment to facilitate varying effective code assignments to the interfered user device to mitigate cross-correlation of effective codes between the interfered user device and an interfering user device in another sector. However, in cases where the interfered user device is heavily interfered, it can be desirable to exclude the initial scrambling code sequence set (*e.g*., the code set in use when the interference is detected) because such sequences can be partially responsible for the interference (*e.g*., such sequences, when multiplied by the allocated Walsh code set, result in an effective code with a high cross-correlation to the effective code(s) of the dominant interferer). Thus, inferences can be made that removing the initial scrambling code sequence set from a list of candidate variation sets is beneficial to improving interference diversity, and such scrambling code sets can be excluded from a recycling pattern. It will be appreciated that the foregoing examples are illustrative in nature and are not intended to limit the number of inferences that can be made, or the manner in which inferences can be made, in conjunction with various aspects of the systems and/or methods described herein.

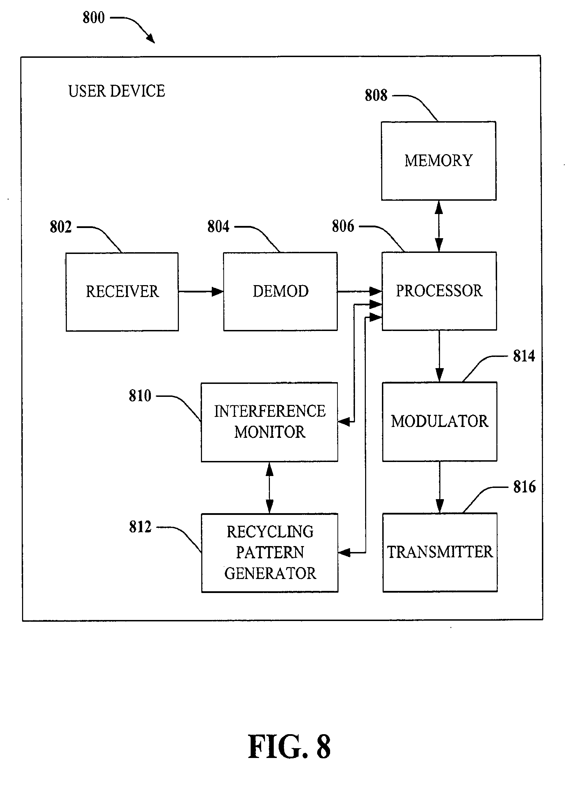

**Fig. 8** is an illustration of a user device 800 that facilitates hopping effective codes within a time slot in a TDD-CDMA wireless communication environment, in accordance with one or more embodiments described herein. User device 800 comprises a receiver 802 that receives a signal from, for instance, a receive antenna, and performs typical actions (*e.g*., filters, amplifies, downconverts, *etc*.) on the received signal and digitizes the conditioned signal to obtain samples. A demodulator 804 can obtain received symbols for each symbol period, as well as provide received pilot symbols to a processor 806 for channel estimation and the like. Processor 806 can additionally be operatively associated with a modulator 814 and a transmitter 816 that facilitate modulating and transmitting information generated by processor 806.

Processor 806 can be a processor dedicated to analyzing information received by receiver component 802 and/or generating information for transmission by a transmitter 816, a processor that controls one or more components of user device 800, and/or a processor that both analyzes information received by receiver 802, generates information for transmission by transmitter 816 and controls one or more components of user device 800.

User device 800 can additionally comprise memory 808 that is operatively coupled to processor 806 and that stores information related to Walsh codes assigned to the user device 800, scrambling code sequence sets, effective code variation patterns, scrambling code sequence recycling protocols, or any other suitable information related to effective code hopping within a time slot as described herein. For example, memory can store one or more lookup tables comprising information related to Walsh code allocations, scrambling code assignments within one or more radio frames and/or time slots, and the like. Processor 806 can also be endowed with an intelligent component (not shown) that makes inferences regarding a successful scrambling code recycling pattern based on interference levels over time, in order to facilitate future selections of appropriate recycling patterns to increase interference diversity when necessary.

It will be appreciated that the data store (*e.g*., memories) components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 808 of the subject systems and methods is intended to comprise, without being limited to, these and any other suitable types of memory.

Processor 806 is further coupled to an interference monitor 810 that can facilitate detecting a dominant interferer and/or evaluating interference levels based at least in part on information stored in memory 808 and/or information received and processed by processor 806. Interference monitor 810 can be operatively associated with recycling pattern generator 812, which can also be coupled to processor 806, and which can initiate a scrambling code sequence hopping protocol to increase interference diversity based on a indication that user device 800 is being interfered. Recycling pattern generator 812 can thus facilitate providing numerous permutations and/or combinations of scrambling code sequence sets for allocation to different segments within a transmission time frame in order to permit variation of effective codes (*e.g*., Walsh code x scrambling code) in a UMTS TDD communication environment.

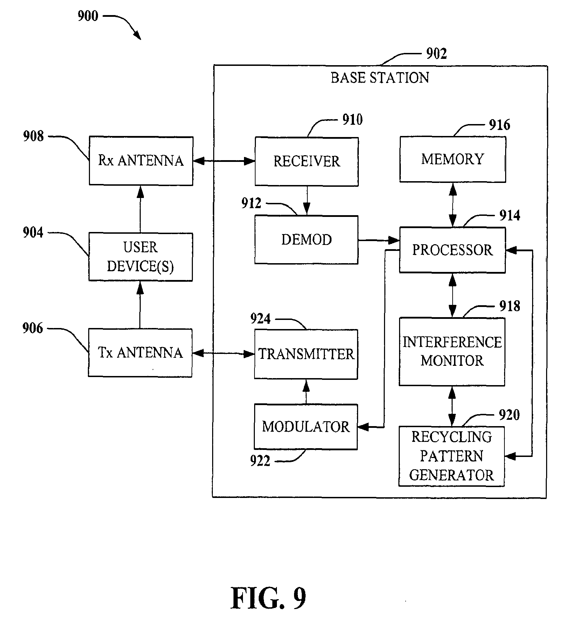

**Fig. 9** is an illustration of a system 900 that facilitates performing varying effective codes within a time slot to mitigate jamming by a dominant interferer in a TDD-CDMA wireless communication environment in accordance with one or more aspects set forth herein. System 900 comprises a base station 902 that communicates with one or more user devices 904 via a transmit antenna 906 and a receive antenna 908, although more than one transmit and/or receive antenna can be employed in conjunction with various aspects. Base station 902 comprises a receiver 910 that receives information from receive antenna 908 and is operatively associated with a demodulator 912 that demodulates received information. Demodulated symbols can be analyzed by a processor 914 that is similar to the processor described above with regard to Fig. 8, and which is coupled to a memory 916 that stores information related to user devices, 904, a effective codes allocated thereto, scrambling code sequences, recycling patterns, interference levels, lookup tables comprising information related to the foregoing, and/or any other suitable information related to scrambling code-Walsh code variation within a time slot as described herein.

Processor 914 is further coupled to an interference monitor 918 that can monitor interference levels at all devices 904 served by base station 902, *etc*., to assist a modulator 922 and/or transmitter 924 in base station 902 to appropriately modulate and transmit a communication signal to user devices 904 via transmit antenna 906. Base station 902 still further comprises a scrambling code recycling pattern generator 920 that varies scrambling code sequences within a transmission time slot according to a pattern to communicate with a given user device 940. Based on such information, base station 902 can transmit to user device 904 using its associated scrambling code at a given point in a transmission. Still furthermore, base station 902 can broadcast a refresh signal to an interfered user device to refresh the user device's encoding scheme to utilize a new, more suitable scrambling code pattern upon detection of unacceptable interference by the interference monitor 918. In this manner, scrambling code variation within a time slot can be performed by the base station 902 and/or by a user device 904, which can be similar the user device described with regard to Fig. 8.

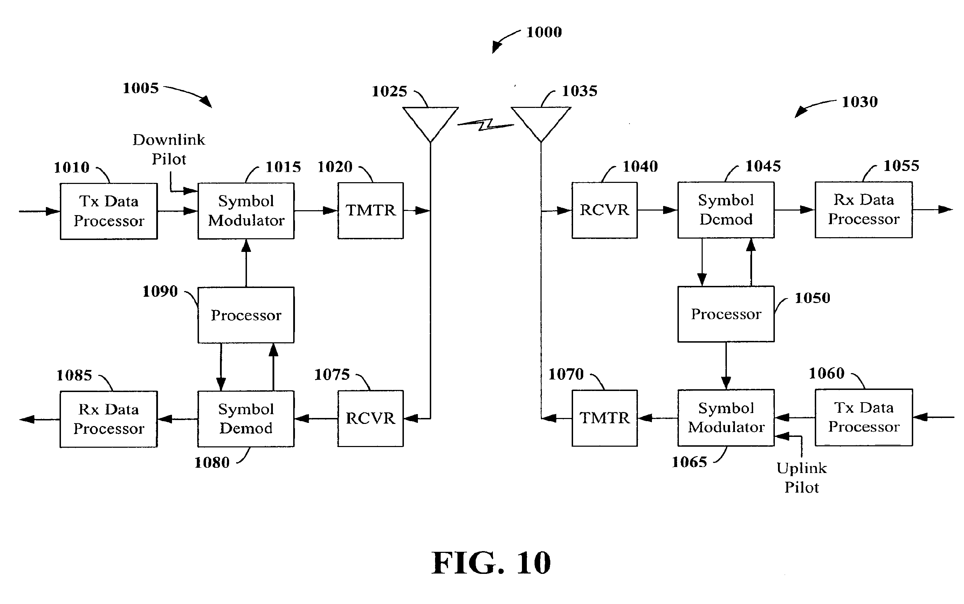

**Fig. 10** shows an exemplary wireless communication system 1000. The wireless communication system 1000 depicts one base station and one terminal for sake of brevity. However, it is to be appreciated that the system can include more than one base station and/or more than one terminal, wherein additional base stations and/or terminals can be substantially similar or different for the exemplary base station and terminal described below. In addition, it is to be appreciated that the base station and/or the terminal can employ the systems (Figs. 1-4 and 8-9) and/or methods (**Figs. 5-7**) described herein to facilitate wireless communication there between.

Referring now to **Fig. 10**, on a downlink, at access point 1005, a transmit (TX) data processor 1010 receives, formats, codes, interleaves, and modulates (or symbol maps) traffic data and provides modulation symbols ("data symbols"). A symbol modulator 1015 receives and processes the data symbols and pilot symbols and provides a stream of symbols. A symbol modulator 1020 multiplexes data and pilot symbols and provides them to a transmitter unit (TMTR) 1020. Each transmit symbol may be a data symbol, a pilot symbol, or a signal value of zero. The pilot symbols may be sent continuously in each symbol period. The pilot symbols can be frequency division multiplexed (FDM), orthogonal frequency division multiplexed (OFDM), time division multiplexed (TDM), frequency division multiplexed (FDM), or code division multiplexed (CDM).

TMTR 1020 receives and converts the stream of symbols into one or more analog signals and further conditions (*e.g*., amplifies, filters, and frequency upconverts) the analog signals to generate a downlink signal suitable for transmission over the wireless channel. The downlink signal is then transmitted through an antenna 1025 to the terminals. At terminal 1030, an antenna 1035 receives the downlink signal and provides a received signal to a receiver unit (RCVR) 1040. Receiver unit 1040 conditions (*e.g*., filters, amplifies, and frequency downconverts) the received signal and digitizes the conditioned signal to obtain samples. A symbol demodulator 1045 demodulates and provides received pilot symbols to a processor 1050 for channel estimation. Symbol demodulator 1045 further receives a frequency response estimate for the downlink from processor 1050, performs data demodulation on the received data symbols to obtain data symbol estimates (which are estimates of the transmitted data symbols), and provides the data symbol estimates to an RX data processor 1055, which demodulates (*i.e*., symbol demaps), deinterleaves, and decodes the data symbol estimates to recover the transmitted traffic data. The processing by symbol demodulator 1045 and RX data processor 1055 is complementary to the processing by symbol modulator 1015 and TX data processor 1010, respectively, at access point 1005.

On the uplink, a TX data processor 1060 processes traffic data and provides data symbols. A symbol modulator 1065 receives and multiplexes the data symbols with pilot symbols, performs modulation, and provides a stream of symbols. A transmitter unit 1070 then receives and processes the stream of symbols to generate an uplink signal, which is transmitted by the antenna 1035 to the access point 1005.

At access point 1005, the uplink signal from terminal 1030 is received by the antenna 1025 and processed by a receiver unit 1075 to obtain samples. A symbol demodulator 1080 then processes the samples and provides received pilot symbols and data symbol estimates for the uplink. An RX data processor 1085 processes the data symbol estimates to recover the traffic data transmitted by terminal 1030. A processor 1090 performs channel estimation for each active terminal transmitting on the uplink.

Processors 1090 and 1050 direct (*e.g*., control, coordinate, manage, *etc*.) operation at access point 1005 and terminal 1030, respectively. Respective processors 1090 and 1050 can be associated with memory units (not shown) that store program codes and data. Processors 1090 and 1050 can also perform computations to derive frequency and impulse response estimates for the uplink and downlink, respectively.

For a multiple-access system (*e.g*., FDMA, OFDMA, CDMA, TDMA, etc.), multiple terminals can transmit concurrently on the uplink. For such a system, the pilot subbands may be shared among different terminals. The channel estimation techniques may be used in cases where the pilot subbands for each terminal span the entire operating band (possibly except for the band edges). Such a pilot subband structure would be desirable to obtain frequency diversity for each terminal. The techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. With software, implementation can be through modules (*e.g*., procedures, functions, and so on) that perform the functions described herein. The software codes may be stored in memory unit and executed by the processors 1090 and 1050.

For a software implementation, the techniques described herein may be implemented with modules (*e.g*., procedures, functions, and so on) that perform the functions described herein. The software codes may be stored in memory units and executed by processors. The memory unit may be implemented within the processor or external to the processor, in which case it can be communicatively coupled to the processor via various means as is known in the art.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method of varying scrambling codes within a time slot of a radio frame for a user device in a wireless communication environment, comprising;
detecting interference at the user device caused by a dominant interferer with a similar code assignment in another sector; and
varying a scrambling code sequence employed to multiply a Walsh code assigned to the user device, at least once within the time slot in response to the detected interference.

2. The method of claim 1, further comprising employing at least two different scrambling code sequence sets within the time slot.

3. The method of claim 2, further comprising multiplying at least one Walsh code assigned to the user device by a first scrambling code sequence to generate and effective code for transmitting a signal within the time slot.

4. The method of claim 3, further comprising multiplying the Walsh code by at least at least a second scrambling code sequence at a subsequent transmission time within the time slot to vary the effective code utilized for transmission within the time slot.

5. The method of claim 1, further comprising employing a 2560-chip time slot.

6. The method of claim 1, further comprising dividing the time slot into 160 16-chip segments.

7. The method of claim 6, further comprising employing between 2 and 160 different scrambling code sequence sets to scramble the 160 16-chip segments.

8. The method of claim 1, further comprising, determining whether detected interference has been brought below a predetermined acceptable interference level by scrambling code variation.

9. The method of claim 8, further comprising increasing a frequency of scrambling code variation within the time slot upon a determination that interference is still above the predetermined acceptable threshold level.

10. An apparatus for varying scrambling codes within a time slot of a radio frame for a user device in a wireless communication environment, comprising:
means for detecting interference of the user device caused by a dominant interferer with a similar code assignment in another sector and
means for varying a scrambling code sequence, employed to multiply Walsh codes assigned to the user device, at least once within the time slot in response to the detected interference.

11. The apparatus of claim 10, wherein the means for varying scrambling code sequences employs at least two different scrambling code sequences to vary the scrambling code sequences allocated to the user device at least once per time slot.

12. The apparatus of claim 10 further comprising means for determining whether scrambling code sequence variation has reduced interference below a predetermined threshold level.

13. The apparatus of claim 12, further comprising means for increasing scrambling code sequence variation in the same or a subsequent time slot if interference has not been reduce to a level below the predetermined threshold level.

14. The apparatus of claim 10, further comprising means for multiplying a Walsh code assigned to the user device by an allocated scrambling code sequence to produce an effective-code for transmitting a signal.

15. The apparatus of Claim 10 further comprising means for dividing the time slot into 160 16-chip segments.

16. The apparatus of Claim 15 further comprising means for employing between 2 and 160 different scrambling code sequence sets to scramble the 160 16-chip segments.

17. The apparatus of claim 10 wherein the means for detecting and the means for processing is a processor that executes instructions for performing effective code hopping within a time slot of a radio frame in a communication environment.

18. The apparatus of Claim 17 further comprising:
a memory that stores information comprising scrambling code variation patterns;
wherein the processor is coupled to the memory

19. The apparatus of claim 18, further comprising an interference monitoring component that assesses when an interference level is above a predetermined threshold level.

20. The apparatus of claim 19, further comprising a recycling pattern generator that generates scrambling code sequence variation patterns for allocation to segments within the time slot during a transmission event.

21. The apparatus of claim 17, wherein the processor determines an appropriate scrambling code recycling pattern to apply to a time slot for the user device based at least in part on information received from the interference monitoring component.

22. The apparatus of claim 20, wherein the recycling pattern generator generates scrambling code recycling patterns comprising from 2 to 160 scrambling code sequence-sets for allocation to segments in the time slot.

23. The apparatus of claim 18, wherein the time slot is one of 15 time slots in a radio frame and comprises 160 16-chip-long segments.

24. The apparatus of claim 18, wherein the memory stores one or more lookup tables comprising information related to user device identity, Walsh code assignments, scrambling code allocations, detected interference events, and scrambling code recycling patterns.

25. A computer-readable medium having stored thereon computer-executable instructions that, when executed on a processor, perform all the steps of the method of any of Claims 1, 2, or 7 to 9.

## Patentansprüche

1. Ein Verfahren zum Variieren eines Verwürfelungscodes innerhalb eines Zeitschlitzes eines Funkrahmens für eine Nutzereinrichtung in einer Drahtloskommunikationsumgebung, wobei das Verfahren Folgendes aufweist:
Detektieren von Interferenz an der Nutzereinrichtung, die durch einen dominanten Störer mit einer ähnlichen Codezuweisung in einem anderen Sektor verursacht wird; und
Variieren einer Verwürfelungscodesequenz, die eingesetzt wird zum Multiplizieren eines Walsh-Codes, der der Nutzereinrichtung zugewiesen ist, und zwar wenigstens einmal innerhalb des Zeitschlitzes ansprechend auf die detektierte Interferenz.

2. Verfahren nach Anspruch 1, das weiter das Einsetzen von wenigstens zwei unterschiedlichen Verwürfelungscodesequenzsätzen innerhalb des Zeitschlitzes aufweist.

3. Verfahren nach Anspruch 2, das weiter das Multiplizieren wenigstens eines Walsh-Codes, der der Nutzereinrichtung zugewiesen ist, mit einer ersten Verwürfelungscodesequenz aufweist, um einen effektiven Code zum Senden eines Signals innerhalb des Zeitschlitzes zu generieren.

4. Verfahren nach Anspruch 3, das weiter das Multiplizieren des Walsh-Codes mit wenigstens einer zweiten Verwürfelungscodesequenz zu einer nachfolgenden Sendezeit innerhalb des Zeitschlitzes aufweist, um den effektiven Code, der zur Sendung innerhalb des Zeitschlitzes genutzt wird, zu variieren.

5. Verfahren nach Anspruch 1, das weiter das Einsetzen eines 2560-Chip-Zeitschlitzes aufweist.

6. Verfahren nach Anspruch 1, das weiter das Aufteilen des Zeitschlitzes in 160 16-Chip-Segmente aufweist.

7. Verfahren nach Anspruch 6, das weiter das Einsetzen von zwischen 2 und 160 unterschiedlichen Verwürfelungscodesequenzensätzen aufweist, um die 160 16-Chip-Segmente zu verwürfeln.

8. Verfahren nach Anspruch 1, das weiter das Bestimmen aufweist, ob die detektierte Interferenz durch Variation des Verwürfelungscodes unter einen vorbestimmten akzeptablen Interferenzpegel gebracht worden ist.

9. Verfahren nach Anspruch 8, das weiter das Erhöhen einer Frequenz einer Verwürfelungscodevariation innerhalb des Zeitschlitzes auf eine Bestimmung hin aufweist, dass die Interferenz immer noch über dem vorbestimmten akzeptablen Schwellenpegel liegt.

10. Eine Vorrichtung zum Variieren von Verwürfelungscodes innerhalb eines Zeitschlitzes eines Funkrahmens für eine Nutzereinrichtung in einer Drahtloskommunikationsumgebung, wobei die Vorrichtung Folgendes aufweist:
Mittel zum Detektieren von Interferenz der Nutzereinrichtung, die durch einen dominanten Störer mit einer ähnlichen Codezuweisung in einem anderen Sektor verursacht wird, und
Mittel zum Variieren einer Verwürfelungscodesequenz, die eingesetzt wird zum Multiplizieren von Walsh-Codes, die der Nutzereinrichtung zugewiesen sind, und zwar wenigstens einmal innerhalb des Zeitschlitzes ansprechend auf die detektierte Interferenz.

11. Vorrichtung nach Anspruch 10, wobei die Mittel zum Variieren von Verwürfelungscodesequenzen wenigstens zwei unterschiedliche Verwürfelungscodesequenzen einsetzen, um die Verwürfelungscodesequenzen, die der Nutzereinrichtung zugeteilt sind, wenigstens einmal pro Zeitschlitz zu variieren.

12. Vorrichtung nach Anspruch 10, die weiter Mittel aufweist zum Bestimmen, ob die Verwürfelungscodesequenzvariation die Interferenz unter einen vorbestimmten Schwellenpegel verringert hat.

13. Vorrichtung nach Anspruch 12, die weiter Mittel aufweist zum Erhöhen der Verwürfelungscodesequenzvariation in dem gleichen oder einem nachfolgenden Zeitschlitz, wenn die Interferenz nicht auf einen Pegel unter dem vorbestimmten Schwellenpegel reduziert worden ist.

14. Vorrichtung nach Anspruch 10, die weiter Mittel aufweist zum Multiplizieren eines Walsh-Codes, der der Nutzereinrichtung zugewiesen ist, mit einer zugeteilten Verwürfelungscodesequenz, um einen effektiven Code zum Senden eines Signals zu erzeugen.

15. Vorrichtung nach Anspruch 10, die weiter Mittel zum Aufteilen des Zeitschlitzes in 160 16-Chip-Segmente aufweist.

16. Vorrichtung nach Anspruch 15, die weiter Mittel aufweist zum Einsetzen von zwischen 2 und 160 unterschiedlichen Verwürfelungscodesequenzsätzen, um die 160 16-Chip-Segmente zu verwürfeln.

17. Vorrichtung nach Anspruch 10, wobei die Mittel zum Detektieren und die Mittel zum Verarbeiten ein Prozessor sind, der die Instruktionen zum Durchführen von effektivem Code-Hopping bzw. Code-Sprüngen innerhalb eines Zeitschlitzes eines Funkrahmens in einer Kommunikationsumgebung ausführt.

18. Vorrichtung nach Anspruch 17, die weiter Folgendes aufweist:
einen Speicher, der Information speichert, die Verwürfelungscodevariationsmuster aufweist;
wobei der Prozessor an den Speicher gekoppelt ist.

19. Vorrichtung nach Anspruch 18, die weiter eine Interferenzüberwachungskomponente aufweist, die beurteilt, wann ein Interferenzpegel über einem vorbestimmten Schwellenpegel ist.

20. Vorrichtung nach Anspruch 19, die weiter einen Recycling- bzw. Wiederverwendungsmustergenerator aufweist, der Verwürfelungscodesequenzvariationsmuster zur Zuteilung an Segmente innerhalb des Zeitschlitzes während einem Sendeereignis generiert.

21. Vorrichtung nach Anspruch 17, wobei der Prozessor ein geeignetes Verwürfelungscoderecyclingmuster bestimmt, das auf einen Zeitschlitz für die Nutzereinrichtung anzuwenden ist, und zwar basierend zumindest teilweise auf Information, die von der Interferenzüberwachungskomponente empfangen wird.

22. Vorrichtung nach Anspruch 20, wobei der Recyclingmustergenerator Verwürfelungscoderecyclingmuster generiert, die 2 bis 160 Verwürfelungscodesequenzsätze zur Zuteilung an Segment in dem Zeitschlitz aufweisen.

23. Vorrichtung nach Anspruch 18, wobei der Zeitschlitz einer von 15 Zeitschlitzen in einem Funkrahmen ist und 160 16-Chip-lange Segmente aufweist.

24. Vorrichtung nach Anspruch 18, wobei der Speicher eine oder mehrere Nachschlagetabellen speichert, die Information aufweisen in Bezug auf die Nutzereinrichtungsidentität, Walsh-Code-Zuweisungen, Verwürfelungscodezuweisungen, detektierte Interferenzereignisse und Verwürfelungscoderecyclingmuster.

25. Ein computerlesbares Medium mit darauf gespeicherten computerlesbaren Instruktionen, die, wenn sie auf einem Prozessor ausgeführt werden, alle Schritte des Verfahrens nach einem der Ansprüche 1, 2 oder 7 bis 9 durchführen.

## Revendications

1. Procédé pour faire varier des codes de brouillage dans un créneau temporel d'une trame radio pour un dispositif d'utilisateur dans un environnement de communication sans fil, comprenant les étapes suivantes :
détecter des interférences au niveau du dispositif d'utilisateur, provoquées par une source d'interférences dominante ayant une affectation de code similaire dans un autre secteur ; et
faire varier une séquence de codes de brouillage utilisée pour multiplier un code de Walsh affecté au dispositif d'utilisateur, au moins une fois dans le créneau temporel en réponse aux interférences détectées.

2. Procédé selon la revendication 1, comprenant en outre l'utilisation d'au moins deux ensembles de séquences de codes de brouillage différents dans le créneau temporel.

3. Procédé selon la revendication 2, comprenant en outre la multiplication d'au moins un code de Walsh affecté au dispositif d'utilisateur par une première séquence de codes de brouillage pour générer un code effectif pour transmettre un signal dans le créneau temporel.

4. Procédé selon la revendication 3, comprenant en outre la multiplication du code de Walsh par au moins une deuxième séquence de codes de brouillage à un instant de transmission ultérieur dans le créneau temporel pour faire varier le code effectif utilisé pour la transmission dans le créneau temporel.

5. Procédé selon la revendication 1, comprenant en outre l'utilisation d'un créneau temporel de 2560 éléments de code.

6. Procédé selon la revendication 1, comprenant en outre la division du créneau temporel en 160 segments de 16 éléments de code.

7. Procédé selon la revendication 6, comprenant en outre l'utilisation d'entre 2 et 160 ensembles de séquences de codes de brouillage différents pour brouiller les 160 segments de 16 éléments de code.

8. Procédé selon la revendication 1, comprenant en outre de déterminer si les interférences détectées ont été ramenées en dessous d'un niveau d'interférences acceptable prédéterminé par la variation du code de brouillage.

9. Procédé selon la revendication 8, comprenant en outre l'augmentation d'une fréquence de variation de code de brouillage dans le créneau temporel lorsqu'on détermine que les interférences sont encore au-dessus du niveau de seuil acceptable prédéterminé.

10. Dispositif pour faire varier des codes de brouillage dans un créneau temporel d'une trame radio pour un dispositif d'utilisateur dans un environnement de communication sans fil, comprenant :
des moyens pour détecter des interférences du dispositif d'utilisateur, provoquées par une source d'interférences dominante ayant une affectation de code similaire dans un autre secteur ; et
des moyens faire varier une séquence de codes de brouillage utilisée pour multiplier des codes de Walsh affectés au dispositif d'utilisateur, au moins une fois dans le créneau temporel en réponse aux interférences détectées.

11. Dispositif selon la revendication 10, dans lequel les moyens pour faire varier les séquences de codes de brouillage utilisent au moins deux séquences de codes de brouillage différentes pour faire varier les séquences de codes de brouillage attribuées au dispositif d'utilisateur au moins une fois par créneau temporel.

12. Dispositif selon la revendication 10, comprenant en outre des moyens pour déterminer si la variation de la séquence de codes de brouillage a réduit les interférences en dessous d'un niveau de seuil prédéterminé.

13. Dispositif selon la revendication 12, comprenant en outre des moyens pour augmenter la variation des séquences de codes de brouillage dans le même créneau temporel ou un créneau temporel ultérieur si les interférences n'ont pas été réduites à un niveau inférieur au niveau de seuil prédéterminé.

14. Dispositif selon la revendication 10, comprenant en outre des moyens pour multiplier un code de Walsh affecté au dispositif d'utilisateur par une séquence de codes de brouillage attribuée pour produire un code effectif pour la transmission d'un signal.

15. Dispositif selon la revendication 10, comprenant en outre des moyens pour diviser le créneau temporel en 160 segments de 16 éléments de code.

16. Dispositif selon la revendication 15, comprenant en outre des moyens pour utiliser entre 2 et 160 ensembles de séquences de codes de brouillage différents pour brouiller les 160 segments de 16 éléments de code.

17. Dispositif selon la revendication 10, dans lequel les moyens pour détecter et les moyens pour traiter sont un processeur qui exécute des instructions pour réaliser des sauts de code effectif dans un créneau temporel d'une trame radio dans un environnement de communication.

18. Dispositif selon la revendication 17, comprenant en outre :
une mémoire qui mémorise des informations comprenant des motifs de variation de codes de brouillage ;
dans lequel le processeur est couplé à la mémoire.

19. Dispositif selon la revendication 18, comprenant en outre un composant de surveillance d'interférences qui estime le moment où un niveau d'interférences est supérieur à un niveau de seuil prédéterminé.

20. Dispositif selon la revendication 19, comprenant en outre un générateur de motifs de recyclage qui génère des motifs de variations de séquences de codes de brouillage pour attribution à des segments dans le créneau temporel pendant un événement de transmission.

21. Dispositif selon la revendication 17, dans lequel le processeur détermine un motif de recyclage de codes de brouillage approprié à appliquer à un créneau temporel pour le dispositif d'utilisateur sur la base au moins en partie d'informations reçues du composant de surveillance d'interférences.

22. Dispositif selon la revendication 20, dans lequel le générateur de motifs de recyclage génère des motifs de recyclage de codes de brouillage comprenant de 2 à 160 ensembles de séquences de codes de brouillage pour attribution à des segments dans le créneau temporel.

23. Dispositif selon la revendication 18, dans lequel le créneau temporel est l'un de 15 créneaux temporels dans une trame radio et comprend 160 segments longs de 16 éléments de code.

24. Dispositif selon la revendication 18, dans lequel la mémoire mémorise une ou plusieurs tables de correspondance comprenant des informations associées à une identité de dispositif d'utilisateur, à des affectations de codes de Walsh, à des attributions de codes de brouillage, à des événements d'interférences détectés, et à des motifs de recyclage de codes de brouillage.

25. Support lisible par un ordinateur comportant mémorisées sur lui des instructions exécutables par un ordinateur qui, lorsqu'elles sont exécutées sur un processeur, réalisent toutes les étapes du procédé de l'une quelconque des revendications 1, 2, ou 7 à 9.
